# EUROPEAN PATENT SPECIFICATION

(11) **EP 0 875 167 B1**
(45) Date of publication and mention of the grant of the patent: **23.07.2003**
(21) Application number: 98303313.5
(22) Date of filing: 28.04.1998
(51) Int. Cl.: A44B 19/34

(54) **Reinforcing tape for slide fastener and method for reinforcing end portion of fastener tape**
Band zur Verstärkung von Reissverschlüssen und Verfahren zum Verstärken der Enden von Verschlussbändern
Ruban de renforcement pour fermeture à glissière et procédé de renforcement de l'extrémité d'un ruban de fermeture

(30) Priority: 30.04.1997 JP 12476597
(43) Date of publication of application: 04.11.1998
(73) Proprietor: YKK CORPORATION, Chiyoda-ku, Tokyo (JP)
(72) Inventor: Watanabe, Kozo, Kurobe-shi, Toyama-ken (JP)
(74) Representative: Kidd, Piers Burgess

(56) References cited:
- EP-A- 0 336 347
- EP-A- 0 739 597
- GB-A- 1 507 915
- GB-A- 2 166 488
- US-A- 3 490 970
- PATENT ABSTRACTS OF JAPAN vol. 011, no. 379 (C-463), 10 December 1987 & JP 62 149780 A (DAICEL CHEM IND LTD), 3 July 1987

## Description

### BACKGROUND OF THE INVENTION

### 1. Field of the Invention:

This invention relates to reinforcing structure of the end portions of fastener tapes of a separable slide fastener, and more particularly to a reinforcing tape or reinforcing sheet material to be attached to each of the end portions of fastener tapes intended for permitting attachment of a pin-and-socket separator and a method for reinforcing the end portions of fastener tapes therewith.

### 2. Description of the Prior Art:

The reinforcing tapes to be attached to the end portions of fastener tapes have been heretofore known in various types. The conventional reinforcing tapes include those which, for the sake of obviating the necessity of preparing reinforcing tapes dyed specially in various colors matched to the colors of dyed fastener tapes and consequently saving such time and labor as would otherwise be incurred in the inventory control, use transparent synthetic resin films in a superposed manner so as to show the colors of the dyed fastener tapes therethrough. For example, the reinforcing piece which is formed of two superposed transparent synthetic resin films having different melting points and is adapted to be applied fast to a fastener tape by melting that of the two films having a lower melting point as disclosed in Japanese Utility Model Publication No. 44-25,843 and the lateral application tape which is formed by superposing on one side of a transparent film of nylon 6 or nylon 66 a transparent polyester copolymer film having a melting point of not more than 200°C so as to show the color of the base fabric of the fastener tape therethrough as disclosed in published Japanese Patent Application, KOKAI (Early Publication) No. (hereinafter referred to briefly as "JP-A-") 62-149,780 have been known to the art.

Also JP-A-08-288,033, corresponding to EP-A-0 739 597, discloses a reinforcing tape which has a transparent elastomer film used for the obverse surface layer and an adhesive layer superposed on the reverse surface thereof. Owing to the proper flexibility of the elastomer film, this reinforcing tape can be easily shaped in conformity with the contour of the core portion of the fastener tape and, even when it is repeatedly folded, the folded portion is not whitened. U.S.P. 3,490,970 discloses a method for reinforcing the end portions of fastener tapes by causing a wire mesh of metal or synthetic resin to adhere to at least one face of each of the fastener tapes by the use of a thermoplastic resin under application of heat and pressure.

### SUMMARY OF THE INVENTION

Although various types of reinforcing tapes have been heretofore known in the art as mentioned above, the fundamental concept thereof resides in attaching a reinforcing layer formed of transparent resin film or plain weave fibers to the end portion of a fastener tape through the medium of an adhesive layer by simultaneous application of heat and pressure. For the adhesive layer mentioned above, generally a high melting and high viscosity hot-melt adhesive manifesting a melting point in the range of 130° to 140°C and a melt viscosity at 200 °C in the range of 4,000 to 6,000 poises is used.

When the reinforcing tapes are attached to the fastener tapes by the use of an adhesive layer having such high melt viscosity, however, a product which is fitted with the fastener tapes, on being laundered or dry cleaned, encounters the problem that the peel strength between the reinforcing tape and the fastener tape is degraded to the extent of rendering the reinforcing tape easy to peel.

When the reinforcing tape is attached to the fastener tape by simultaneous application of heat and pressure, the phenomenon occasionally emerges that bubbles enter between the adhesive layer and the fastener tape and impair the appearance of the reinforced portion of the fastener tape where the reinforcing layer happens to be formed of a resin film (or further between the adhesive layer and the reinforcing layer where the adhesive layer and the reinforcing layer are superposed on the fastener tape and attached thereto by simultaneous application of heat and pressure) or that plain weave fibers are embrittled where the reinforcing layer is formed of such plain weave fibers. No report has ever appeared in literature concerning the relation between such phenomenon and a heat source.

It is, therefore, an object of the present invention to provide a reinforcing tape which can be attached with ample adhesive strength to the end portion of a fastener tape of a slide fastener and, even after the slide fastener fitted therewith is laundered or dry cleaned, suffers only sparing loss of peeling strength.

Another object of the present invention is to provide a method for the reinforcement of the end portion of a fastener tape, which allows attachment of a reinforcing tape with high and stable adhesive strength to the end portion of a fastener tape without producing any problems such as entry of bubbles between the reinforcing tape and the fastener tape and embrittlement of fibers.

To accomplish the objects mentioned above, the present invention provides a reinforcing tape composed of a reinforcing layer and an adhesive layer and characterized by using for the adhesive layer a hot-melt adhesive having a melting point in the range of 110° to 120°C and a melt viscosity at 200°C in the range of 1,000 to 2,000 poises.

The present invention further provides a method for the reinforcement of the end portion of a fastener tape of a slide fastener. One embodiment of this method is characterized by attaching a reinforcing layer formed of resin film to the end portion of a fastener tape of a slide fastener through the medium of an adhesive layer formed of a hot-melt adhesive having a melting point in the range of 110° to 120°C and a melt viscosity at 200°C in the range of 1,000 to 2,000 poises by dint of ultrasonic heating and application of pressure. Another embodiment thereof is characterized by effecting the attachment of a reinforcing layer formed of plain weave fibers through the medium of an adhesive layer formed of the hot-melt adhesive mentioned above by dint of heat and pressure exerted by a hot plate.

### BRIEF DESCRIPTION OF THE DRAWINGS

Other objects, features, and advantages of the invention will become apparent from the following description taken together with the drawings, in which:
Fig. 1 is a fragmentary cross-sectional view of the end portion of a fastener tape provided with a reinforcing tape of the present invention;
Fig. 2 is a fragmentary plan view showing the lower part of a slide fastener provided with reinforcing tapes of the present invention;
Fig. 3 is a fragmentary plan view showing the lower part of the slide fastener of Fig. 2 held in a separated state;
Fig. 4 is a graph showing the peel strength between the fastener tape and the reinforcing tape in a sample of Example 1;
Fig. 5 is a graph showing the peel strength between the fastener tape and the reinforcing tape in a sample of Comparative Example 1;
Fig. 6 is a graph showing the peel strength between the fastener tape and the reinforcing tape in a sample of Comparative Example 2;
Fig. 7 is a graph showing the peel strength between the fastener tape and the reinforcing tape in a sample of Example 2; and
Fig. 8 is a graph showing the peel strength between the fastener tape and the reinforcing tape in a sample of Comparative Example 3.

### DETAILED DESCRIPTION OF THE INVENTION

When a reinforcing tape is attached to a fastener tape by using for an adhesive layer a high melting and high viscosity hot-melt adhesive manifesting a melting point in the range of 130° to 140°C and a melt viscosity at 200°C in the range of 4,000 to 6,000 poises as mentioned above, a product furnished with the fastener tape, on being laundered or dry cleaned, incurs the problem that the reinforcing tape and the fastener tape suffer a decline of their peel strength and tend to separate easily.

The present inventor has made a diligent study concerning this phenomenon and consequently found that the decline of the peeling strength after laundering or dry cleaning occurs because the melt viscosity of the hot-melt adhesive is unduly high and, as a result, the hot-melt adhesive, while mediating adhesion between the reinforcing tape and the fastener tape, encounters difficulty in penetrating the interstices of the fibers of the fastener tape and fails to produce a fully satisfactory anchoring effect. The inventor, therefore, has continued a study regarding the relation between such anchoring effect and the behavior of the hot-melt adhesive serving as the adhesive layer and consequently found that the hot-melt adhesive requires its melting point and melt viscosity to fall in respective specific ranges to manifest a complete anchoring effect. The present invention has been perfected as a result.

Specifically, the present invention features use of a hot-melt adhesive manifesting a melting point in the range of 110° to 120°C and a melt viscosity at 200°C in the range of 1,000 to 2,000 poises for the adhesive layer of the reinforcing tape. When the hot-melt adhesive having such relatively low melting point and low viscosity is used for the adhesive layer, it easily melts during the attachment of the reinforcing tape to the fastener tape by simultaneous application of heat and pressure, the molten resin consequently produced easily penetrates the interstices of the fibers of the fastener tapes, and the resin, on being cooled and hardened, continues its existence between the fibers and manifests a high anchoring effect. A product which is furnished with the fastener tape having its end portion reinforced as described above, therefore, maintains high peel strength between the reinforcing tape and the fastener tape even after the product has been laundered or dry cleaned.

The reinforcing tape contemplated by the present invention differs from the conventional reinforcing tape in requiring use of the characteristic hot-melt adhesive mentioned above for the adhesive layer, but does not need to be different therefrom in any of the other component requirements. Resin films such as, for example, films, multilayer films, and fiber-reinforced films of synthetic resin and plain weave fibers (taffeta) can be used for the reinforcing layer.

According to the inventor's study, however, it has been found that the optimum heat source varies with the type of reinforcing layer to be used and that it is ultrasonic wave in the case of a resin film or a heater (hot plate) in the case of plain weave fibers.

When the reinforcing tape is bonded to the fastener tape by simultaneous application of heat and pressure, the problem arises that bubbles tend to enter between the adhesive layer of the reinforcing tape and the fastener tape where the reinforcing layer is formed of resin film (or further between the adhesive layer and a reinforcing layer where the adhesive layer is applied to the fastener tape and then the reinforcing layer is superposed thereon) and impair the appearance as described above. This entry of bubbles may be logically explained by a supposition that the fastener tape of a fabric produced by weaving or knitting synthetic fibers or natural fibers has an undulating surface and, when the reinforcing tape of flat surface is applied to such undulating surface, the air entrapped between the depressions in the surface of the fastener tape and the reinforcing tape are liable to persist as bubbles. According to the inventor's study, it has been found that this problem can be eliminated by using ultrasonic wave as a heat source.

As respects the step for effecting the attachment by the use of the ultrasonic wave, first the adhesive layer is interposed between the fastener tape and the reinforcing tape and then these tapes are nipped and compressed between an anvil and a horn. Subsequently, the superposed layers are made to generate heat by exposure to ultrasonic vibration until the tapes are joined. Thereafter, the ultrasonic vibration is stopped and the anvil and the horn are cooled as held in a state compressing the fastener tape and the reinforcing tape.

According to such step of attachment, since the anvil and the horn jointly keep the fastener tape and the reinforcing tape nipped and compressed therebetween until the adhesive agent fixes the fastener tape and the reinforcing tape completely to each other by adhesion and further since the anvil and the horn keep the fastener tape and the reinforcing tape exposed to ultrasonic vibration and meanwhile nipped and compressed therebetween, the bubbles are gradually expelled from between the tapes by the vibration. As a result, the entry of bubbles between the fastener tape and the reinforcing tape (adhesive layer) occurs only with difficulty.

Further, this step of attachment allows manufacture of a fastener product excelling in appearance because the molten resin attains easy entry between the fibers of the fastener tape, enhances the adhesive strength of the reinforcing tape to the fastener tape, and enables itself to cool and solidify within a die as well. The ultrasonic wave used as a heat source brings about the advantage of enjoying an increase in the cooling rate and improvement in productivity as compared with the hot plate as a heat source.

For the purpose of precluding the entry of bubbles between the adhesive layer and the reinforcing layer during the step of attachment, the procedure which comprises preparing a one-piece reinforcing tape having an adhesive layer superposed in advance on a reinforcing layer and then attaching this reinforcing tape to the fastener tape proves to be a preferable practice.

In contrast, when the reinforcing layer is formed of plain weave fibers (taffeta), the hot plate is preferred as a heating means over the ultrasonic wave because the ultrasonic wave has the possibility of embrittling the plain weave fibers.

When the reinforcing layer is formed of plain weave fibers, since the fibers themselves are virtually devoid of rigidity, the rigidity of the adhesive layer is preferred to be higher for the sake of improving the workability of the step of attachment than when the reinforcing layer uses a resin film. The hardness of the adhesive layer is preferred to exceed a level of about 40 on the Shore Hardness Scale.

Now, the present invention will be described more specifically below with reference to the drawings annexed hereto.

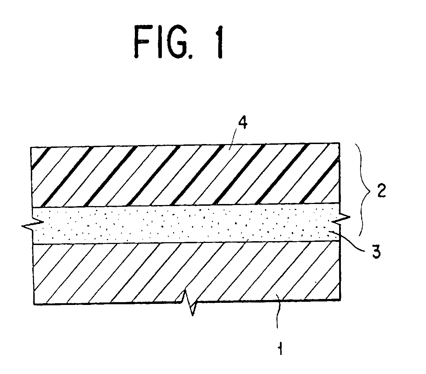

Fig. 1 illustrates one example of the construction of a reinforcing tape 2 fixed to the end portion of a fastener tape 1 of a slide fastener according to the present invention. The reinforcing tape 2 is constructed by superposing a reinforcing layer 4 on the fastener tape 1 through the medium of an adhesive layer 3.

The construction, as depicted in Fig. 1, has the reinforcing tape 2 superposed on only one side of the fastener tape 1. Of course, this superposition may be made on both sides of the fastener tape 1. Generally, it is made on both the obverse and the reverse side.

The reinforcement of the end portion of the fastener tape 1 may be carried out by applying the adhesive layer 3 to the surface of the end portion of the fastener tape 1, then superposing the reinforcing layer 4 on the adhesive layer 3, and joining the superposed layers by simultaneous application of heat and pressure. It is, however, effected preferably by a procedure which, as described above, comprises preparing the reinforcing tape 2 having the reinforcing layer 4 coated on one side thereof with the adhesive layer 3 by the known technique of superposition such as, for example, the dry laminating technique or coextruding technique and bonding this reinforcing tape 2 to the surface of the end portion of the fastener tape 1 through the medium of the adhesive layer 3 by simultaneous application of heat and pressure. Though such heating means as a hot plate, ultrasonic wave, or high frequency are available for the use of heat in the simultaneous application of heat and pressure, it is preferred to use ultrasonic wave where the reinforcing layer is formed of resin film or a hot plate (heater) where it is formed of plain weave fibers (taffeta) as described above.

The hot-melt adhesive for the adhesive layer 3 is not particularly limited by kind but is only required to manifest a melting point in the range of 110° to 120°C and a melt viscosity at 200°C in the range of 1,000 to 2,000 poises as mentioned above. It is, however, preferred to be a hot-melt adhesive having affinity for the material of the fastener tape 1, particularly a hot-melt adhesive using resin of the same type as the raw material of the fastener tape. When the material of the fastener tape is nylon, for example, the polyamide hot-melt adhesive having as the base polymer thereof a low melting transparent nylon copolymer of at least three components obtained by copolymerizing such monomers as nylon 6, nylon 66, nylon 610, and nylon 612 can be advantageously used. When the material of the fastener tape 1 is polyester fibers, the polyester hot-melt adhesive having as the base polymer thereof a transparent polyester copolymer can be advantageously used.

The thickness of the adhesive layer 3 is proper generally in the range of 30 to 120 µm, preferably in the approximate range of 50 to 70 µm.

For the reinforcing layer 4, films and plain weave fibers (taffeta) of various thermoplastic elastomers and thermoplastic resins such as of polyamides like nylon 6 and nylon 66 generally used for the surface layer of the reinforcing tape or polyesters like polyethylene terephthalate (PET), polybutylene terephthalate (PBT), and PET/PBT polymer alloy can be used. Particularly, thermoplastic elastomers are preferably used as materials for the reinforcing layer in terms of flexibility. As the thermoplastic elastomer, the polyester thermoplastic elastomers and polyamide thermoplastic elastomers heretofore known to the art are preferably used. Besides, polyolefin thermoplastic elastomers and fluorocarbon thermoplastic elastomers are usable. Further, the fiber-reinforced film having the transparent film layer of a thermoplastic elastomer or thermoplastic resin superposed on one or both of the opposite surfaces of a fiber reinforcement layer can be used. For the fiber reinforcement layer, a reticular sheet (mesh) formed of monofilaments of thermoplastic resin or a thin-layer nonwoven fabric of thermoplastic resin fibers (a very thin sheet having component fibers not fixed by adhesion) can be advantageously used. The presence of such fiber reinforcement layer allows retention of satisfactory flexibility, compensates the film for the defect of vulnerability to twist or lateral pull, and ensures acquisition of high torsional strength and high transverse tensile strength. Particularly, the use of the thermoplastic elastomer as the material for the transparent film layer ensures acquisition of high flexibility. Incidentally, it is preferable to use thermoplastic resins of the same type for the raw materials of the transparent film layer and fiber reinforcement layer.

When the reinforcing layer is formed of resin film, it is preferable from the viewpoint of the resistance to the heat of a pressing iron to use a thermoplastic resin having a softening point of not lower than 170 °C .

The thickness of the reinforcing layer 4 is proper generally in the range of 50 to 200 µm. When the reinforcing layer is formed of a laminate of fiber reinforcement layer and transparent film layer(s), the thickness of a transparent film layer as the surface layer is preferred to be in the approximate range of 50 to 150µm and the thickness of a transparent film layer as the lower layer to be in the approximate range of 20 to 50 µm. If these transparent film layers have unduly large thicknesses, their excesses will bring about the disadvantage of increasing the total thickness of the reinforcing tape and decreasing the flexibility of the reinforcing tape.

When the fiber reinforcement layer is formed of a reticular sheet, the diameter of the monofilaments making up the sheet is proper in the range of 50 - 120µm and the density in the longitudinal and the lateral direction is preferable in the approximate range of 20 to 70 monofilaments/cm respectively. In contrast, when the fiber reinforcement layer is formed of a thin-layer non-woven fabric, the thickness thereof is preferred to be in the approximate range of 50 to 120 µm. If the diameter of the monofilaments or the thickness of the thin layer non-woven fabric unduly exceeds the upper limit of the range mentioned above, the reinforcing tape has the disadvantage of losing flexibility and tending to decrease transparency in spite of the advantage of gaining in torsional strength and transverse tensile strength. If the diameter or the thickness is smaller than the lower limit of the range mentioned above, the reinforcing tape has the disadvantage of incurring difficulty in securing sufficient torsional strength and transverse tensile strength. The diameter of the monofilaments making up the reticular sheet or the thickness of the thin layer non-woven fabric and the density of the filaments or fibers may be suitably set preferably in the relevant ranges mentioned above in due consideration of the thicknesses of the transparent film layer and the adhesive layer so as to balance such factors as strength, flexibility, and transparency.

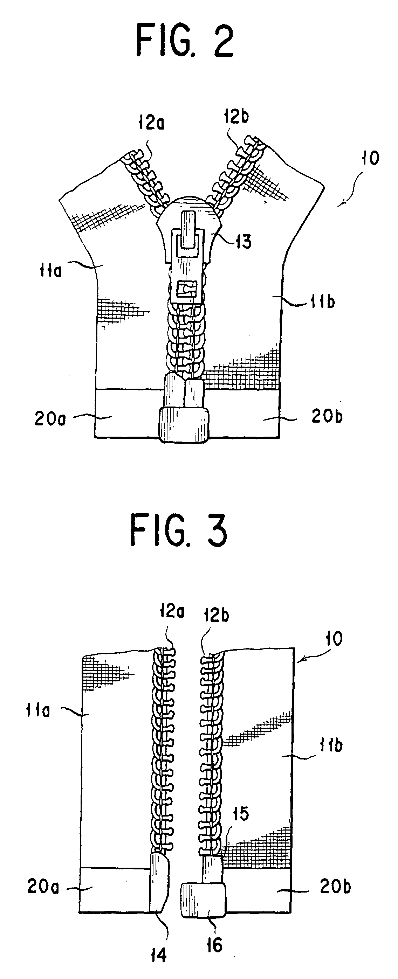

Fig. 2 and Fig. 3 each show the lower part of one example of a slide fastener 10 having the reinforcing tapes 20a and 20b of the present invention provided at the lower end portions of a pair of fastener tapes 11a and 11b to which members of a pin-and-socket separator are attached.

The slide fastener 10 shown in Fig. 2 includes a pair of fastener tapes 11a and 11b, a pair of reinforcing tapes 20a and 20b which are welded or bonded to the lower end portions of the respective fastener tapes 11a and 11b, rows of coupling elements 12a and 12b, such as spiral coil coupling elements, attached to the inner longitudinal edges of the respective fastener tapes 11a and 11b, a slider 13, and a pin-and-socket separator composed of an insertion member or butterfly bar 14, a box bar 15, and a box member 16, these members being secured to the inner edges of the reinforcing tapes 20a and 20b which are welded to the lower end portions of fastener tapes 11a and 11b. The slider 13 is slidably mounted on the rows of coupling elements 12a and 12b for engaging and disengaging the coupling elements 12a and 12b. Fig. 2 shows the slide fastener 10 in a closed state and Fig. 3 shows it in an opened state.

The fastener tapes 11a and 11b are manufactured by weaving or knitting a fibrous material formed of such synthetic fibers as polyester, nylon, etc. or such natural fibers as cotton. To the lower end portions of the pair of fastener tapes 11a and 11b, the reinforcing tapes 20a and 20b are respectively welded or bonded through the medium of an adhesive layer as explained hereinbefore. The butterfly bar 14 which is one of the fitting metal pieces for the pin-and-socket separator is secured to the inner edge of one, 20a, of the opposed reinforcing tapes and the box member 16 for admitting the butterfly bar 14 and the box bar 15 therefor are secured to the opposite inner edge of the other, 20b, of the reinforcing tapes. The butterfly bar 14 is releasably engageable in a slot in the box member 16. The box member 16 and the box bar 15 are integrally molded as one piece.

In the manner described above, the end portions of the fastener tapes 11a and 11b are reinforced by the application thereto with high adhesive strength of the reinforcing tapes 20a and 20b possessing such transparency or translucency as to allow the color of the fastener tapes to be seen therethrough and excelling in flexibility. Since the reinforcing tapes 20a and 20b are nearly transparent as a whole, they allow the color of the fastener tapes 11a and 11b to be directly seen therethrough. Since the reinforcing tapes appear in essentially the same color as the dyed fastener tapes, they will not impair the appearance of the fastener tapes. The reinforcing tape of one kind, therefore, can be applied to fastener tapes of varying colors. For the purpose of allaying the surface gloss of the reinforcing tape or augmenting the flexibility thereof, the reinforcing layer in the surface of the reinforcing tape may be knurled after or during the application of heat and pressure.

### Example 1 and Comparative Examples 1, 2

Samples were manufactured by superposing reinforcing tapes produced by laminating an adhesive layer on a varying resin film layer indicated in Table 1 below one each in the lateral direction on the obverse and the reverse side of a slide fastener having the coupling elements thereof in a meshed state such that the adhesive layers contacted the surfaces and intersected the rows of coupling elements and then bonding the reinforcing tapes to the slide fastener by ultrasonic heating under pressure. The ultrasonic welding was carried out by the use of a 40-kHz ultrasonic wave oscillator, with the air pressure set at 4.0 kg/cm², the temperature of the die heater at 50 °C (found level 60°C), the distance between the horn and die at 0.45 mm, and the oscillation time at 0.6 seconds.

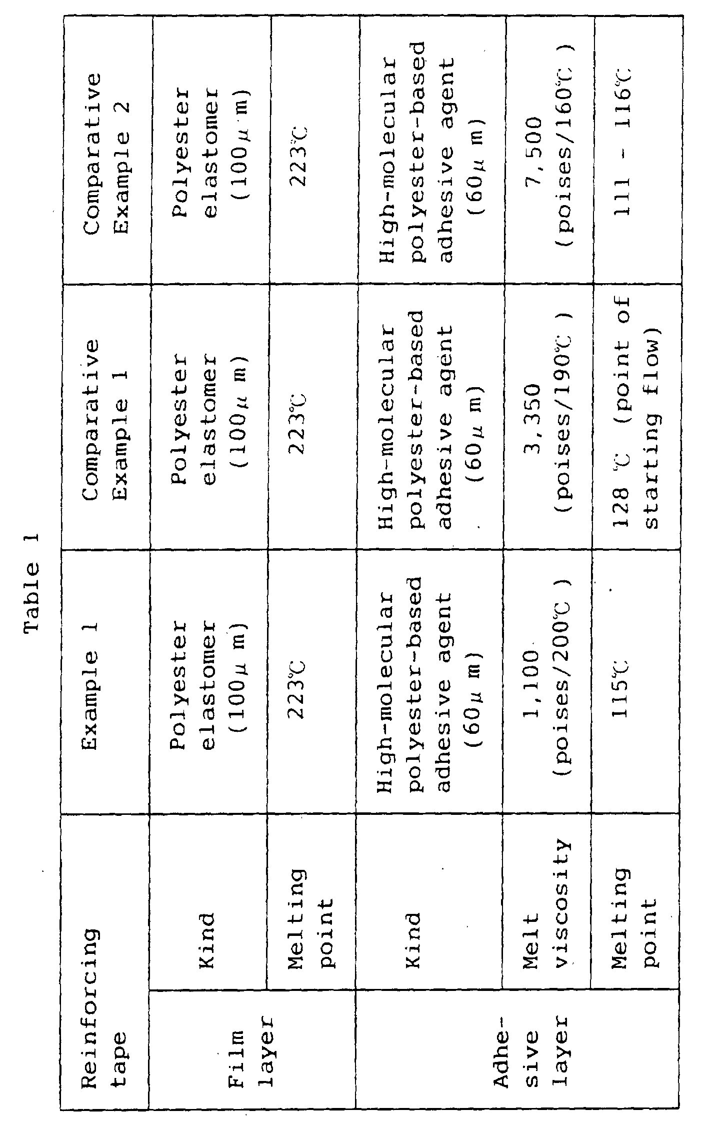

Each of the samples was laundered five times and dry cleaned five times and then tested for peel strength. The laundering was performed up to five repetitions by following the Method A-4 for laundering test specified in JIS (Japanese Industrial Standard) L 0844 "Testing Methods for Color Fastness to Washing and Laundering." The dry cleaning was performed by carrying out up to five repetitions the series of steps of washing a given sample for three minutes at room temperature in a detergent produced by dissolving soap in perchloroethylene, rinsing the washed sample with perchloroethylene twice each for three minutes, draining the rinsed sample by high-speed rotation for three minutes and meanwhile treating it by the use of an instrument sold under the trademark of "Spraymatic" (for the sake of preventing static electrification, conferring soft finish, and furnishing protection against microbe and odor), then drying the treated sample at 70°C for 15 minutes, and further gradually cooling and drying it for five minutes. The peel strength of a given sample was determined by dividing the reinforcing tape in the sample into two halves along a cut inserted in the center of the meshed coupling elements and peeling the right half of the reinforcing tape from the sample by pulling the right cut edge up and meanwhile measuring the strength required for peeling. The peel strength was determined on both obverse and reverse surface of the sample.

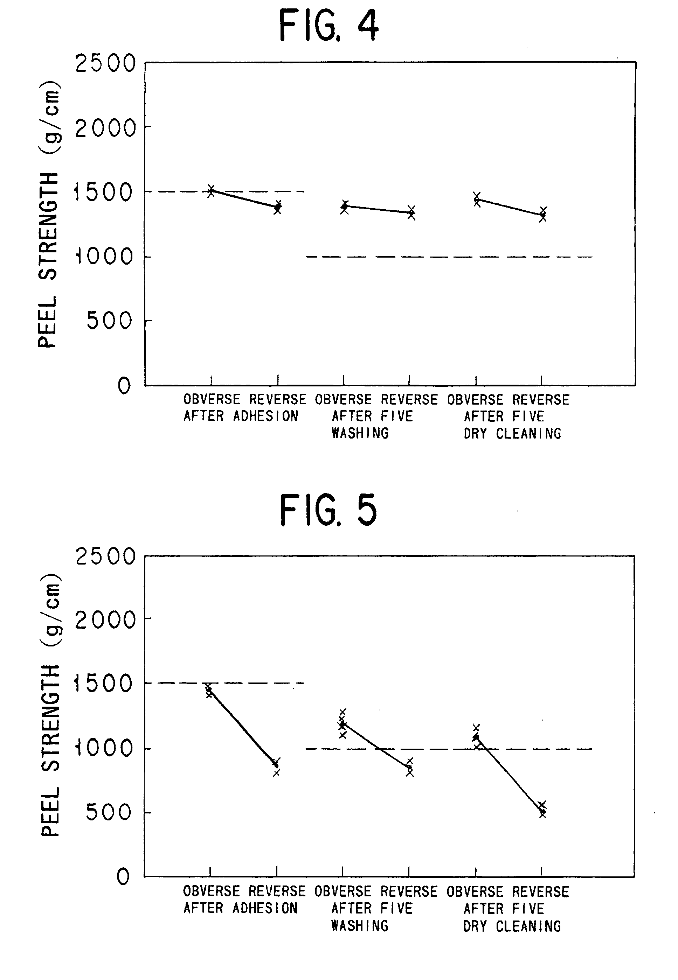

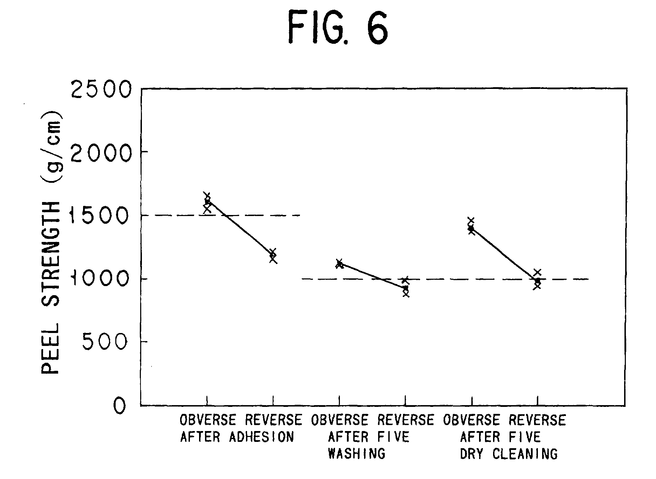

The results are shown in Fig. 4 through Fig. 6. It is clear from these diagrams that the peel strength of the sample of Example 1 shown in Fig. 4 which used an adhesive layer of low melting point and low melt viscosity was higher than the peel strength of the sample of Comparative Example 1 shown in Fig. 5 and that of the sample of Comparative Example 2 shown in Fig. 6 invariably after the adhesion, after five rounds of washing, and after five rounds of dry cleaning. Incidentally, the standard for the peel strength is 1,500 g/cm after adhesion and 1,000 g/cm both after washing and dry cleaning.

### Example 2 and Comparative Example 3

Samples were manufactured by preparing reinforcing tapes having an adhesive layer laminated on a resin film layer indicated in Table 2 below and attaching these reinforcing tapes one each to the obverse and the reverse side of a slide fastener having the coupling elements thereof kept in a meshed state by simultaneous application of heat and pressure by the use of a heater as a heat source. These samples were laundered five times and dry cleaned five times, and thereafter tested for peel strength in the same manner as in Example 1 mentioned above. The temperature of the heater was set at 165°C in Example 2 and at 185°C in Comparative Example 3.

**Table 2**

| Reinforcing tape | | Example 2 | Comparative Example 3 |
|---|---|---|---|
| Film layer | Kind | polyester elastomer (120 µm) | polyester elastomer (120 µm) |
| | Melting point (°C ) | 223 | 223 |
| Adhesive layer | Kind | High-molecular polyester-based adhesive agent (60 µm) | High-molecular polyester-based adhesive agent (60 µm) |
| | Melt viscosity (poises/200 °C ) | 1,100 | 4,000 |
| | Melting point (°C ) | 115 | 143 |

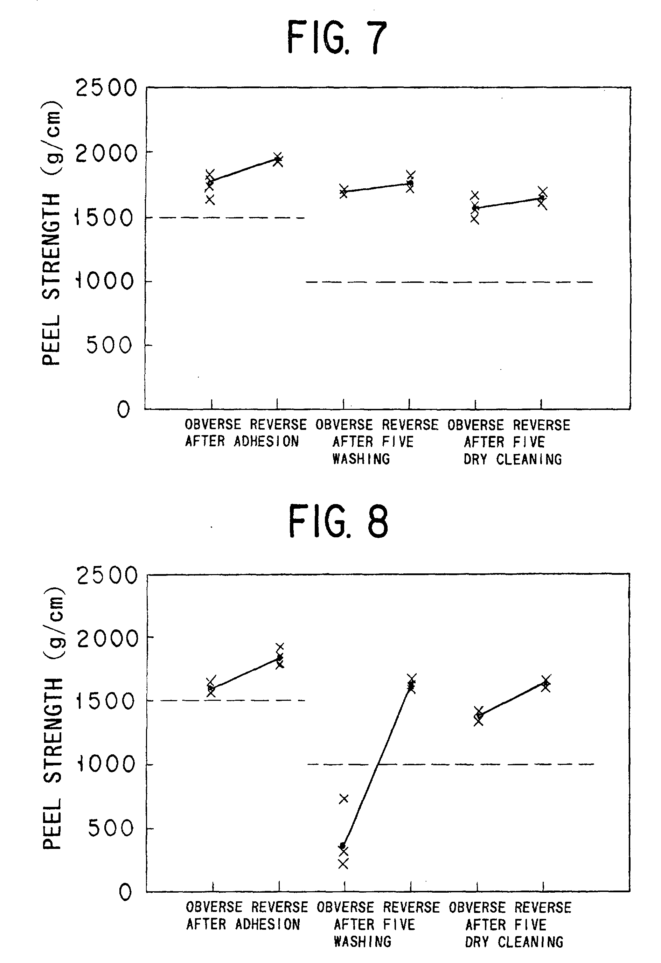

The results are shown in Fig. 7 and Fig. 8. It is clear from these diagrams that the peel strength of the sample of Example 2 shown in Fig. 7 which used an adhesive layer of low melting point and low melt viscosity was higher than the peel strength of the sample of Comparative Example 3 shown in Fig. 8 invariably after the adhesion, after five rounds of washing, and after five rounds of dry cleaning. It is also clear from Fig. 8 that the sample of Comparative Example 3 showed a large difference in adhesive force on the obverse and the reverse side thereof as evinced by the fact that the peel strength of the reinforcing tape on the obverse side was considerably weaker than that on the reverse side. In contrast, it is noted that in the case of the sample of Example 2, the reinforcing tapes were attached to the fastener tapes as well balanced on the obverse and the reverse side.

The reinforcing tape of the present invention is composed of a reinforcing layer and an adhesive layer and the adhesive layer uses a low melting and low viscosity hot-melt adhesive manifesting a melting point in the range of 110° to 120°C and a melt viscosity at 200 °C in the range of 1,000 to 2,000 poises as described above. Thus, the resin of the adhesive layer attains easy infiltration between the fibers of the fastener tape and produces an ample anchoring effect. The reinforcing tape of the present invention, therefore, can be attached with ample adhesive strength to the end portion of a fastener tape of a slide fastener and shows virtually no decline of peel strength even after being laundered or dry cleaned.

In the attachment of the reinforcing tape to the fastener tape by simultaneous application of heat and pressure, proper selection of a heating means in conformity with the material of the reinforcing layer results in preventing the fastener tape from suffering decline of appearance or strength after the attachment. For example, when the reinforcing layer is formed of resin film, the entry of bubbles between the reinforcing tape and the fastener tape can be precluded by using ultrasonic wave as a heat source. When the reinforcing layer is formed of plain weave fibers, use of a hot plate (heater) as a heat source allows the attachment of the reinforcing tape to the fastener tape to be attained without inducing embrittlement of the plain weave fibers of the reinforcing layer.

While certain specific embodiments and working examples have been disclosed herein, the invention may be embodied in other specific forms. The described embodiments and examples are therefore to be considered in all respects as illustrative and not restrictive, the scope of the invention being indicated by the appended claims.

## Claims

1. A reinforcing tape for a slide fastener comprising a reinforcing layer (4) and an adhesive layer (3), **characterized in that** said adhesive layer (3) is formed of a hot-melt adhesive having a melting point in the range of 110° to 120°C and a melt viscosity at 200°C in the range of 1,000 to 2,000 poises.

2. The reinforcing tape according to claim 1, wherein said adhesive layer (3) is formed of a hot-melt adhesive using as the raw material thereof a resin of the same type as the material of a fastener tape of the slide fastener to which said adhesive layer is to be joined.

3. The reinforcing tape according to claim 1 or 2, wherein said reinforcing layer (4) has a thickness in the range of 50 to 200 µm and said adhesive layer has a thickness (3) in the range of 30 to 120µm.

4. The reinforcing tape according to any one of claims 1 to 3, wherein said reinforcing layer (4) is formed of a synthetic resin film.

5. The reinforcing tape according to any one of claims 1 to 3, wherein said reinforcing layer (4) is formed of a thermoplastic elastomer film.

6. The reinforcing tape according to any one of claims 1 to 3, wherein said reinforcing layer (4) is formed of a fiber-reinforced thermoplastic film.

7. The reinforcing tape according to any one of claims 1 to 3, wherein said reinforcing layer (4) is formed of a plain weave fibers.

8. The reinforcing tape according to any one of claims 1 to 7, wherein said reinforcing layer (4) and said adhesive layer (3) are made of the same type of thermoplastic resin.

9. The reinforcing tape according to any one of claims 1 to 3, wherein said reinforcing layer (4) comprises a fiber reinforcement layer formed of either a reticular sheet of thermoplastic resin monofilaments or a thin-layer non-woven fabric of thermoplastic resin fibers and at least one transparent film layer made of a thermoplastic elastomer or thermoplastic resin and adapted to be superposed on at least one surface of said fiber reinforcement layer, said fiber reinforcement layer and said transparent film layer being made of the same type of thermoplastic resin.

10. The reinforcing tape according to any one of claims 1 to 3, wherein said reinforcing layer (4) comprises a transparent film layer made of a thermoplastic elastomer or thermoplastic resin and having a thickness in the range of 50 to 150µm and a fiber reinforcement layer formed of either a reticular sheet of thermoplastic resin monofilaments of a diameter in the range of 50 to 120 µm or a thin-layer non-woven fabric of thermoplastic resin fibers of a thickness in the range of 50 to 120 µm, said fiber reinforcement layer being superposed on said adhesive layer.

11. The reinforcing tape according to claim 10, which further comprises a transparent film layer made of a thermoplastic elastomer or thermoplastic resin and having a thickness in the range of 20 to 50µm, said transparent film layer being interposed between said fiber reinforcement layer (4) and said adhesive layer (3).

12. A method for the reinforcement of an end portion of a fastener tape in a slide fastener, which comprises attaching a reinforcing layer (4) formed of resin film to the end portion of said fastener tape (1) by ultrasonic heating under pressure through the medium of an adhesive layer (3) formed of a hot-melt adhesive having a melting point in the range of 110 to 120°C and a melt viscosity at 200°C in the range of 1,000 to 2,000 poises.

13. The method according to claim 12, wherein said reinforcing layer (4) is formed of a thermoplastic elastomer film.

14. The method according to claim 12, wherein said reinforcing layer (4) is formed of a fiber-reinforced thermoplastic film.

15. A method for the reinforcement of an end portion of a fastener tape in a slide fastener, which comprises attaching a reinforcing layer (4) formed of plain weave fibers to the end portion of said fastener tape (1) by application of heat of a hot plate and pressure through the medium of an adhesive layer (3) formed of a hot-melt adhesive having a melting point in the range of 110° to 120°C and a melt viscosity at 200°C in the range of 1,000 to 2,000 poises.

## Patentansprüche

1. Verstärkungsband für einen Reißverschluss, welches eine Verstärkungsschicht (4) und eine Klebstoffschicht (3) aufweist, **dadurch gekennzeichnet, dass** die Klebstoffschicht (3) aus einem heißschmelzenden Klebstoff besteht, dessen Schmelzpunkt zwischen 110° und 120° C liegt und dessen Schmelzenviskosität bei 200° C zwischen 100 und 2000 Poise liegt.

2. Verstärkungsband nach Anspruch 1, bei welchem die Klebstoffschicht (3) aus einem heißschmelzenden Klebstoff besteht, bei dem als Rohmaterial ein Harz gleichen Typs wie beim Verschlussband des Reißverschlusses, mit dem die Klebstoffschicht verbunden werden soll, verwendet wird.

3. Verstärkungsband nach einem der Ansprüche 1 oder 2, bei dem die Verstärkungsschicht (4) eine Dicke zwischen 50 und 200 µm hat und die Klebstoffschicht (3) eine Dicke zwischen 30 und 120 µm hat.

4. Verstärkungsband nach einem der Ansprüche 1 bis 3, bei welchem die Verstärkungsschicht (4) aus einem Kunstharzfilm besteht.

5. Verstärkungsband nach einem der Ansprüche 1 bis 3, bei welchem die Verstärkungsschicht (4) aus einem thermoplastischen Elastomerfilm besteht.

6. Verstärkungsband nach einem der Ansprüche 1 bis 3, bei welchem die Verstärkungsschicht (4) aus einem faserverstärkten thermoplastischen Film besteht.

7. Verstärkungsband nach einem der Ansprüche 1 bis 3, bei welchem die Verstärkungsschicht (4) aus in Leinwandbindung gewebten Fasern besteht.

8. Verstärkungsband nach einem der Ansprüche 1 bis 7, bei welchem die Verstärkungsschicht (4) und die Klebstoffschicht (3) aus dem gleichen Typ von thermoplastischem Harz bestehen.

9. Verstärkungsband nach einem der Ansprüche 1 bis 3, bei welchem die Verstärkungsschicht (4) eine Faserverstärkungsschicht aufweist, die entweder aus einer netzartigen Bahn von aus thermoplastischem Harz hergestellten Monofilamenten oder einem Dünnschicht-Vliesstoff aus thermoplastischen Harzfasern und mindestens einer transparenten Filmschicht erzeugt ist, die aus einem thermoplastischen Elastomer oder einem thermoplastischen Harz hergestellt ist und die mindestens einer Fläche der Faserverstärkungsschicht überlagert werden kann, wobei die Faserverstärkungsschicht und die transparente Filmschicht aus dem gleichen Typ von thermoplastischem Harz bestehen.

10. Verstärkungsband nach einem der Ansprüche 1 bis 3, bei welchem die Verstärkungsschicht (4) eine transparente Filmschicht, die aus einem thermoplastischen Elastomer oder einem thermoplastischen Harz hergestellt ist und eine Dicke zwischen 50 bis 150 µm hat, und eine Faserverstärkungsschicht aufweist, die entweder aus einer netzartigen Bahn von aus thermoplastischem Harz hergestellten Monofilamenten eines Durchmessers zwischen 50 und 120 µm oder einem Dünnschicht-Vliesstoff aus thermoplastischen Harzfasern einer Dicke zwischen 50 bis 120 µm erzeugt ist, wobei die Faserverstärkungsschicht der Klebstoffschicht überlagert ist.

11. Verstärkungsband nach Anspruch 10, welches weiter eine transparente Filmschicht aufweist, die aus einem thermoplastischen Elastomer oder einem thermoplastischen Harz hergestellt ist und deren Dicke zwischen 20 und 50 µm beträgt, wobei die transparente Filmschicht zwischen die Faserverstärkungsschicht (4) und der Klebstoffschicht (3) eingelegt ist.

12. Verfahren zur Verstärkung eines Endes eines Verstärkungsbandes eines Reißverschlusses, welches umfasst: Eine aus einem Harzfilm erzeugte Verstärkungsschicht (4) wird am Ende des Verschlussbandes (1) durch Ultraschall-Erhitzen und unter Druck mittels einer Klebstoffschicht (3) befestigt, welche aus einem heißschmelzenden Klebstoff besteht, dessen Schmelzpunkt zwischen 110° und 120° C liegt und dessen Schmelzenviskosität bei 200° C zwischen 100 und 2000 Poise liegt.

13. Verfahren nach Anspruch 12, bei welchem die Verstärkungsschicht (4) aus einem thermoplastischen Elastomerfilm besteht.

14. Verfahren nach Anspruch 12, bei welchem die Verstärkungsschicht (4) aus einem faserverstärkten thermoplastischen Film besteht.

15. Verfahren zur Verstärkung eines Endes eines Verstärkungsbandes eines Reißverschlusses, welches umfasst: Eine aus in Leinwandbindung gewebten Fasern erzeugte Verstärkungsschicht (4) wird am Ende des Verschlussbandes (1) und durch Aufbringen der Wärme einer heißen Platte und unter Druck mittels einer Klebstoffschicht (3) befestigt, welche aus einem heißschmelzenden Klebstoff besteht, dessen Schmelzpunkt zwischen 110° und 120° C liegt und dessen Schmelzenviskosität bei 200° C zwischen 100 und 2000 Poise liegt.

## Revendications

1. Ruban de renforcement pour fermeture à glissière, comprenant une couche de renforcement (4) et une couche adhésive (3), **caractérisé en ce que** ladite couche adhésive (3) est constituée d'un adhésif thermofusible ayant un point de fusion compris dans l'intervalle allant de 110 °C à 120 °C et une viscosité à l'état fondu à 200 °C comprise dans l'intervalle allant de 1000 à 2000 poises.

2. Ruban de renforcement selon la revendication 1, dont ladite couche adhésive (3) est constituée d'un adhésif thermofusible utilisant comme matière première une résine du même type que le matériau du ruban de fermeture de la fermeture à glissière auquel ladite couche adhésive doit être réunie.

3. Ruban de renforcement selon la revendication 1 ou 2, dont ladite couche de renforcement (4) a une épaisseur comprise dans l'intervalle allant de 50 à 200 µm et ladite couche adhésive (3) a une épaisseur comprise dans l'intervalle allant de 30 à 120 µm.

4. Ruban de renforcement selon l'une quelconque des revendications 1 à 3, dont ladite couche de renforcement (4) est constituée d'un film de résine synthétique.

5. Ruban de renforcement selon l'une quelconque des revendications 1 à 3, dont ladite couche de renforcement (4) est constituée d'un film d'élastomère thermoplastique.

6. Ruban de renforcement selon l'une quelconque des revendications 1 à 3, dont ladite couche de renforcement (4) est constituée d'un film thermoplastique renforcé par des fibres.

7. Ruban de renforcement selon l'une quelconque des revendications 1 à 3, dont ladite couche de renforcement (4) est constituée de fibres tissées à armure toile.

8. Ruban de renforcement selon l'une quelconque des revendications 1 à 7, dont ladite couche de renforcement (4) et ladite couche adhésive (3) sont constituées du même type de résine thermoplastique.

9. Ruban de renforcement selon l'une quelconque des revendications 1 à 3, dont ladite couche de renforcement (4) comprend une couche de renforcement fibreuse, constituée d'une feuille réticulaire de monofilaments de résine thermoplastique ou d'une couche mince d'étoffe non tissée de fibres de résine thermoplastique, et au moins une couche de film transparent en élastomère thermoplastique ou en résine thermoplastique, appliquée sur au moins une surface de ladite couche de renforcement fibreuse, ladite couche de renforcement fibreuse et ladite couche de film transparent étant constituées du même type de résine thermoplastique.

10. Ruban de renforcement selon l'une quelconque des revendications 1 à 3, dont ladite couche de renforcement (4) comprend une couche de film transparent en élastomère thermoplastique ou en résine thermoplastique, ayant une épaisseur comprise dans l'intervalle allant de 50 à 150 µm, et une couche de renforcement fibreuse, constituée d'une feuille réticulaire de monofilaments de résine thermoplastique, ayant un diamètre compris dans l'intervalle allant de 50 à 120 µm, ou d'une couche mince d'étoffe non tissée de fibres de résine thermoplastique, ayant une épaisseur comprise dans l'intervalle allant de 50 à 120 µm, ladite couche de renforcement fibreuse étant superposée à ladite couche adhésive.

11. Ruban de renforcement selon la revendication 10, qui comprend en outre une couche de film transparent en élastomère thermoplastique ou en résine thermoplastique, ayant une épaisseur comprise dans l'intervalle allant de 20 à 50 µm, ladite couche de film transparent étant interposée entre ladite couche de renforcement fibreuse (4) et ladite couche adhésive (3).

12. Procédé de renforcement de la partie terminale d'un ruban de fermeture d'une fermeture à glissière, qui comprend la fixation d'une couche de renforcement (4) constituée d'un film de résine à la partie terminale dudit ruban de fermeture, par chauffage aux ultrasons sous pression, par l'intermédiaire d'une couche adhésive (3) constituée d'un adhésif thermofusible ayant un point de fusion compris dans l'intervalle allant de 110 à 120 °C et une viscosité à l'état fondu à 200 °C comprise dans l'intervalle allant de 1000 à 2000 poises.

13. Procédé selon la revendication 12, dans lequel ladite couche de renforcement (4) est constituée d'un film d'élastomère thermoplastique.

14. Procédé selon la revendication 12, dans lequel ladite couche de renforcement (4) est constituée d'un film thermoplastique renforcé par des fibres.

15. Procédé de renforcement de la partie terminale d'un ruban de fermeture d'une fermeture à glissière, qui comprend la fixation d'une couche de renforcement (4) constituée de fibres tissées à armure toile à la partie terminale dudit ruban de fermeture, par application de la chaleur provenant d'une plaque chauffante et de la pression, par l'intermédiaire d'une couche adhésive (3) constituée d'un adhésif thermofusible ayant un point de fusion compris dans l'intervalle allant de 110 à 120 °C et une viscosité à l'état fondu à 200 °C comprise dans l'intervalle allant de 1000 à 2000 poises.
